# EUROPEAN PATENT APPLICATION

(11) **EP 1 955 776 A1**
(43) Date of publication of application: **13.08.2008**
(21) Application number: 07102025.9
(22) Date of filing: 09.02.2007
(51) Int. Cl.: B05B 12/08, B65G 53/66, G05B 13/02, G05D 16/20

(54) **Method and apparatus for improved control of air pressure delivered to a spray applicator**

(71) Applicant: ABB AS, 1396 Billingstad (NO)
(72) Inventor: Mikalsen, Kenneth, Bryne 4340 (NO)
(74) Representative: Dahlstrand, Björn

(57) **Abstract**

An apparatus for spray pattern control in an automated painting or coating apparatus comprising a supply of compressed gas (1), a valve means (11a,11b) controlling the gas supply to an applicator (5), and a conduit (1) transporting said gas from the supply to the applicator (5). A pressure sensing means (13) is arranged to measure the pressure of the gas delivered to the applicator (5), and a control loop (12) uses said valve means (11a,11b) to regulate the pressurized gas flow to control gas pressure at the applicator (5) based on the measured gas pressure.

## Description

### TECHNICAL AREA

The present invention relates to an apparatus for improved control of air pressure delivered to an applicator for spray pattern control on industrial automated painting or coating equipment.

### TECHNICAL BACKGROUND

In a spray paint operation, a paint fluid, which can be in the form of either a liquid or a fine powder, is mixed together with a compressed gas, which is normally air, in a applicator or spray gun nozzle in order to atomize the paint into fine particles and to transfer the paint particles onto the surface of the item being painted. The atomized spray can also be shaped by blowing shaping air on the spray to control the spray pattern.

Typical industrial paint spraying operations are painting various types of manufactured products, for example, automobile bodies.

In order to optimally operate and control the paint spray or coating spray system, the flow of compressed gas or air in the applicator has to be controlled very exactly. Both the atomizing gas and the shaping gas flow have to be controlled in the applicator.

The compressed air used as atomization air and shaping air is typically supplied from onsite or nearby compressors and piped through a distribution system to a downstream point of use.

Air compressors are typically controlled according to system supply pressure, coming online as the system air pressure at the compressor drops below a threshold pressure and going offline at a higher cutout pressure. This will make the pressure of the delivered compressed air vary in the system. The pressure of the delivered compressed air may also vary due to changes in downstream air demand.

The paint spray or coating spray system require a well controlled air flow in the applicator to operate optimally and since the compressed pressure air from a distribution system varies; it is normal practice in painting industry to have air pressure control apparatus between the air distribution system and the painting robot applicator.

The air pressure control apparatus is normally a very exact open loop pressure controller and it is usually located near the painting robot and always at a physical distance from the applicator. The pressurized air needs to be transported in a tube from the pressure control apparatus to the applicator. Since the applicator is located at the end of a flexible arm, the pressurized air tube has to be flexible.

The length of tube between the air pressure control apparatus and the applicator represents a volume. This volume gives rise to a number of problems in exactly controlling the airflow at the applicator.

First, the volume of the pipe influences the response time for flow changes at the applicator.
Second, the volume of the pipe varies from installation to installation since the length of pipe between applicator and control apparatus is not standardized, meaning that the actual response time for a paint robot will vary from installation to installation.
Third, since the tube filled with pressurized air is flexible, the volume of the tube can vary with air pressure and the bending of the tube; this will influence the response of air flow.
Fourth, the movement of the flexible pressurized air tube will influence the back pressure in the tube due to the changing tube geometry as the applicator is moving and bending the tube due to the compressibility of gas/air.

Some of the problems described using an air pressure control apparatus to control the volume flow of air at the applicator can be solved by using an air volume control apparatus. The air volume control apparatus is normally located near the painting robot and always at a physical distance from the applicator. Arranging an air volume control apparatus on the flexible arm of a painting robot is normally not an option due to weight restrictions (robot arm speed and control) and size restrictions (restricting the robot arm reach) placed on the flexible arm of a painting robot. The air volume control apparatus/system has a relative slow response.

One possible flow controller is described in US Pat. Nr. 6,874,404 entitled "Compressed air flow rate controller", which describes a controller for controlling the flow rate of compressed air to a spray paint gun as well as to a comparable tool which is optimally operative dependant upon receiving a specified flow rate of air.

The continuous bending of the flexible pipe changes the volume of the pipe. The changes in pipe geometry when it bends changes the back pressure in the pipe.

The variable volume and variable back pressure of the air pipe together with the compressibility of air as well as the slow response of the volume controller will give rise to changes in air volume flow at the applicator when the air volume flow is controlled at a distance from the applicator.

### SUMMARY OF THE INVENTION

An object of a preferred embodiment of the present invention is to provide an apparatus for improved volume flow control of compressed gas or air delivered to an applicator.

In one embodiment of the present invention the atomizing gas or air is being volume flow controlled. In another embodiment of the present invention the shaping gas or air is being volume flow controlled. In yet another embodiment of the present invention both the atomizing air and shaping air are being volume flow controlled.

The volume flow at the applicator is controlled by controlling the air pressure in or at the applicator. The volume flow out of the applicator is a known function of the pressure in the applicator. For example, a table lookup function for a required volume flow out of the applicator (and temperature) will give the required set value for air pressure in the applicator. The air pressure at the applicator is controlled by measuring the air pressure in or at the applicator and using a closed loop controller controlling an air valve means between the pressurized air feed and the applicator.

The present invention solves a number of problems of regulating the pressurized air flow rate present in the prior art.

The geometry and volume of the pipe connecting the air control valve and applicator hardly affects the controlled pressure at the applicator. The distance between the control valve and applicator can vary from installation to installation but the air flow control will work equally well.

The bending of the air tube due to movements of the robot arm and the resulting variation of back pressure in the tube will not affect the controllability of the airflow.

The complex and nonstandard open loop air pressure controller used in the prior art can be replaced by a simpler and less costly off-the-shelf proportional valve.

The closed loop control can be any kind of control algorithm for example; proportional control, PI-control, PID-control, adaptive control, neural net control, etc.

With a more exact air flow control of the applicator, the quality and reproducibility of painting and coating operations can be increased.

One embodiment of the invention, is an apparatus for spray pattern control in an automated painting or coating apparatus comprising a supply of compressed gas, a valve means controlling the gas supply to an applicator, and a conduit transporting said gas from the supply to the applicator, has a pressure sensing means which is arranged to measure the pressure of the gas delivered to the applicator, and a control loop uses said valve means to regulate the pressurized gas flow to control gas pressure at the applicator based on the measured gas pressure.

According to another embodiment of the invention, the gas comprises air

According to an embodiment of the invention, the pressure sensing means is arranged close to the outlet of the conduit.

According to an embodiment of the invention, the applicator is arranged at the distal end of a jointed arm.

According to an embodiment of the invention, the pressure sensing means is arranged close to the outlet of said conduit.

According to another embodiment of the invention, the pressure sensing means is arranged in the applicator.

According to an embodiment of the invention, the air pressure control is achieved by a closed loop control method.

According to an embodiment of the invention, the air pressure control is achieved by an adaptive control method.

According to an embodiment of the invention, the air pressure control is achieved by a neural net control method.

According to an embodiment of the invention, the pressure sensing means is an optical pressure sensor.

According to an embodiment of the invention, the valve means is placed at a physical distance of the automated painting or coating apparatus.

According to an embodiment of the invention, the valve means is placed outside the paint booth of the automated painting or coating apparatus.

According to an embodiment of the invention, the valve means is placed at the base of the automated painting or coating apparatus.

According to an embodiment of the invention, the valve means is arranged between the base of the automated painting or coating apparatus and applicator.

Another embodiment of the invention, is an apparatus arranged connected to a control unit, or robot control unit, which is arranged with a memory storage device means storing one or more computer programs which when read into a computer or processor will make the computer or processor: receive a measurement of gas pressure delivered to the applicator, and control the compressed gas flow to the applicator by using the measured pressure compared to a set pressure value, calculate the difference between measured pressure and the set pressure value, and calculate the change in valve setting required to minimize the difference.

In another aspect of the invention is a method for spray pattern control in an automated painting or coating apparatus, comprising a supply of compressed gas, a valve means controlling the gas supply to an applicator, a conduit transporting said gas from the supply to the applicator, and the method is measuring gas pressure delivered to the applicator, and controlling the compressed gas flow to the applicator by using the measured pressure.

According to an embodiment of the invention, the method further comprises the step of comparing the measured pressure to a set pressure value.

According to an embodiment of the invention, the method further comprises the step of calculating the difference between measured pressure and set pressure value.

According to an embodiment of the invention, the method further comprises the step of calculating the change in valve setting to minimize the difference.

Another embodiment of the invention is the use of a system for spray pattern control in an automated painting or coating apparatus to carry out application of non-conductive or electrically conductive fluid materials comprising any from the list of: paint, waterborne paint, primer, base coat, top coat, clearcoat, paint component, 2k paint, protective coating, glue, adhesive, sealant.

Another embodiment of the invention is a computer program, directly loadable into the internal memory of a digital computer, comprising software code portions for carrying out the method claimed herein when said product is run on a computer.

Another embodiment of the invention is a computer readable medium comprising a computer program which when read into a computer or processor will cause the computer or processor to carry out a method as claimed.

Another embodiment of the invention is a flow controlled device for providing a precise flow of process air in an automated painting or coating apparatus comprising a supply of compressed gas, a valve means controlling the gas supply to an applicator, and a conduit transporting said gas from the supply to the applicator, where a pressure sensing means in the compressed gas is arranged downstream of said valve means, and a control loop uses said valve means to regulate the pressurized gas flow to control gas pressure at the applicator

### BRIEF DESCRIPTION OF THE DRAWINGS

The invention will be elucidated by reference to an embodiment partially illustrated in the drawings.
Figure 1 illustrates schematically the air flow control of an automated painting or coating equipment, as mounted on a robot, according to the prior art.
Figure 2 illustrates schematically the shaping air or atomizing air flow control of an automated painting or coating equipment according to one embodiment of the present invention.
Figure 3 illustrates the steps of controlling the gas pressure at the applicator, in a flowchart, according to an embodiment of the invention.

### DETAILED DESCRIPTION OF THE EMBODIMENTS

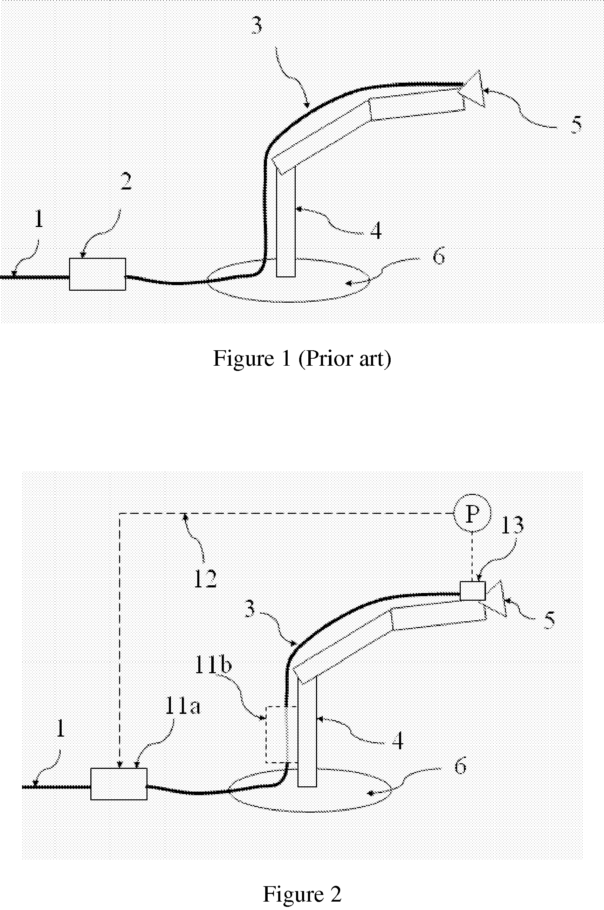

Figure 1 illustrates schematically the air flow control of an automated painting or coating equipment 4, in this case a robot or manipulator arm according to the prior art. A compressed air feed 1 is delivered to an air pressure control apparatus 2 which aims to control the pressure of the air at the applicator 5. A flexible tube 3 transports the pressure controlled air between the air pressure control apparatus 2 and the applicator 5. As the robot arm 4 moves, the volume and geometry of the flexible tube 3 changes.

Figure 1 may also illustrate an automated painting or coating equipment 4 using a volume flow control apparatus 2. The volume flow control regulates the volume flow of air leaving the flow control apparatus 2.

Figure 2 illustrates schematically the air flow control of an automated painting or coating equipment 4 according to one embodiment of the present invention. The compressed air feed 1 is delivered to the air pressure control valve apparatus 11a. A flexible tube 3 connects the air pressure control valve 11 with the applicator 5. Mounted on the robot arm 4 close or directly on the applicator 5 is a pressure sensing means 13. In this embodiment of the present invention, a pressure control loop 12 uses the measured air pressure at the applicator 5 to control or regulate the air flow at air pressure control valve apparatus 11a.

In figure 2, the gas pressure control valve 11a is placed at a physical distance from the automated painting or coating equipment 4, for example outside of a paint booth. In another embodiment of the present invention, the air pressure control valve 11b is placed on the base 6 or on the first arm of the automated painting or coating equipment 4. The pressure sensing means 13 is always placed downstream of the gas pressure control valve 11a, or 11b.

For the purpose of assisting the transport of paint spray, the applicator 5 may be charged with high voltage and also mounted in an explosion proof (EX) environment. If the applicator 5 is charged with high voltage, special pressure sensors 13 have to be used and one possible type of pressure sensors to measure the air pressure at the applicator 5 may be optical pressure sensors.

The closer the valve means gets to the applicator the smaller the lag volume in the tube will be and thus the response time for the apparatus will improve.

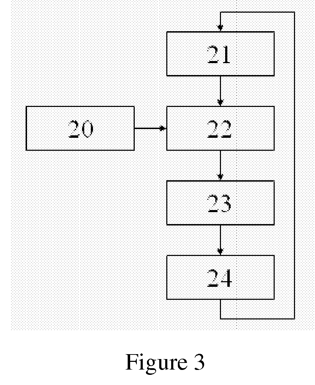

Figure 3 is a flowchart which illustrates steps of controlling the gas pressure at the applicator, according to an embodiment of the invention.
Block 21; the gas or air pressure is measured by a pressure sensor at or in the applicator.
Block 20; the set values for atomizing and shaping air pressure at the applicator are calculated based on the required air flows for atomizing air flow and/or shaping air flow. The sir flows are given from the specifications of the paint job.
Block 22; calculation of the difference between measured pressure at the applicator and set (expected, wanted) pressure at the applicator for atomizing air pressure and/or shaping air pressure.
Block 23; calculation of the new set value for the proportional valve based on the difference between measured pressure and set pressure at the applicator for atomizing air pressure and/or shaping air pressure. The calculation is based on the chosen control algorithm.
Block 24; the position of the proportional valve is changing to the set valve value from block 23 and the pressure is measured again i.e. return to block 21.

The steps in figure 3 may be executed continuously and in parallel.

The steps in the flowchart in figure 3 can be performed for atomizing air only, or for shaping air only, or for both types of airflow in parallel.

The described apparatus can be used for spray pattern control for a number of different substances, such as; paint, waterborne paint, primer, base coat, top coat, clearcoat, paint component, 2k paint, protective coating, glue, adhesive, sealant.

The described automated painting or coating apparatus can be a multi-jointed painting robot but also a simpler machines such as reciprocator or side and top machines. These simpler machines do not have the flexibility of movement as a multi-jointed painting robot and they apply paint basically in two-dimensions.

The above described solutions may also be adapted to coat or spray otherwise apply substances such as protective coatings, sealants, waxes, adhesives and even abrasive materials.

The invention may be supervised, controlled or carried out by one or more computer programs. One or more microprocessors (or processors or computers) comprise a central processing unit CPU connected to or comprised in a control unit of the coating application system described. Said processors, PLCs or computers are used to perform the steps of the methods according to one or more aspects of the invention, as described above and for example with reference to Figure 6. The computer programs for carrying out methods according to the invention may also be run on one or more general purpose industrial microprocessors or PLCs or computers instead of one or more specially adapted computers or processors.

The computer program comprises computer program code elements or software code portions that make the computer or processor perform the methods using equations, algorithms, data, stored values, calculations and the like for the methods previously described, and for example in relation to the flowchart of Figure 3. A part of the program may be stored in a processor as above, but also in a ROM, RAM, PROM, EPROM or EEPROM chip or similar memory storage means. The program may be stored at least in part in a control unit or robot control unit of a system comprising the improved power supply device. The or some of the programs in part or in whole may also be stored locally (or centrally) on, or in, a memory storage device of a control unit or on other suitable computer readable medium such as a magnetic disk, CD-ROM or DVD disk, hard disk, magneto-optical memory storage means, in volatile memory, in flash memory, as firmware, or stored on a data server. Other known and suitable media, including removable memory media, flash memories, hard drives etc. may also be used. The program may also in part be supplied from a data network, including a public network such as the Internet.

## Claims

1. An apparatus for spray pattern control in an automated painting or coating apparatus comprising
a supply of compressed gas,
a valve means controlling the gas supply to an applicator,
and a conduit transporting said gas from the supply to the applicator,
**characterized in that**
a pressure sensing means (13) is arranged to measure the pressure of the gas delivered to the applicator, and
a control loop uses said valve means to regulate the pressurized gas flow to control gas pressure at the applicator based on the measured gas pressure.

2. An apparatus according to claim 1, wherein said gas comprises air.

3. An apparatus according to any of the claims 1-2, wherein said applicator is arranged at the distal end of a jointed arm.

4. An apparatus according to any of the claims 1-3, wherein said pressure sensing means is arranged close to the outlet of said conduit.

5. An apparatus according to any of the claims 1-3, wherein said pressure sensing means is arranged in the applicator.

6. An apparatus according to any of the claims 1-5, wherein said air pressure control is achieved by a closed loop control method.

7. An apparatus according to any of the claims 1-5, wherein said air pressure control is achieved by an adaptive control method.

8. An apparatus according to any of the claims 1-5, wherein said air pressure control is achieved by a neural net control method.

9. An apparatus according to any of the claims 1-8, wherein said pressure sensing means is an optical pressure sensor.

10. An apparatus according to any of the claims 1-9, wherein said valve means is placed at a physical distance of the automated painting or coating apparatus.

11. An apparatus according to the claim 10, wherein said valve means is placed outside the paint booth of the automated painting or coating apparatus.

12. An apparatus according to any of the claims 1-9, wherein said valve means is placed at the base of the automated painting or coating apparatus.

13. An apparatus according to any of the claims 1-9, wherein said valve means is arranged between the base (6) of the automated painting or coating apparatus and applicator (5).

14. An apparatus according to claim 1, **characterized in that** it is arranged connected to a control unit, or robot control unit, which is arranged with a memory storage device means storing one or more computer programs which when read into a computer or processor will make the computer or processor: receive a measurement of gas pressure delivered to the applicator (5), and
control the compressed gas flow to the applicator by using the measured pressure compared to a set pressure value,
calculate the difference between measured pressure and the set pressure value, and
calculate the change in valve setting required to minimize the difference.

15. A method for spray pattern control in an automated painting or coating apparatus, comprising
a supply of compressed gas,
a valve means controlling the gas supply to an applicator,
a conduit transporting said gas from the supply to the applicator, and in which the method is
**characterized by**
measuring gas pressure delivered to the applicator (5), and controlling the compressed gas flow to the applicator (5) by using the measured pressure.

16. A method according to the claim 15, wherein the gas comprises air.

17. A method according to any of the claims 15-16, wherein the gas pressure is measured inside the conduit (3) at the applicator end.

18. A method according to any of the claims 15-16, wherein the gas pressure is measured inside the applicator (5).

19. A method according to any of the claims 15-18, wherein the method further comprises the step of comparing the measured pressure to a set pressure value.

20. A method according to any of the claims 15-19, wherein the method further comprises the step of calculating the difference between measured pressure and set pressure value.

21. A method according to any of the claims 15-20, wherein the method further comprises the step of calculating the change in valve setting to minimize the difference.

22. Use of a system for spray pattern control in an automated painting or coating apparatus according to any of claims 1-13 to carry out application of non-conductive or electrically conductive fluid materials comprising any from the list of: paint, waterborne paint, primer, base coat, top coat, clearcoat, paint component, 2k paint, protective coating, glue, adhesive, sealant.

23. A computer program, directly loadable into the internal memory of a digital computer, comprising software code portions for carrying out a method according to any of the claims 15-21 when said product is run on a computer.

24. A computer readable medium comprising a computer program which when read into a computer or processor will cause the computer or processor to carry out a method according to the steps of the claims 15-21.

25. A flow controlled device for providing a precise flow of process air in an automated painting or coating apparatus comprising
a supply of compressed gas,
a valve means controlling the gas supply to an applicator,
and a conduit transporting said gas from the supply to the applicator,
**characterized in that**
a pressure sensing means (13) in the compressed gas is arranged downstream of said valve means, and
a control loop uses said valve means to regulate the pressurized gas flow to control gas pressure at the applicator.
